(19) Europäisches Patentamt
European Patent Office
Office européen des brevets

(11) **EP 2 158 115 B1**

(12) **EUROPEAN PATENT SPECIFICATION**

(45) Date of publication and mention
of the grant of the patent:
**01.12.2010 Bulletin 2010/48**

(21) Application number: **08762924.2**

(22) Date of filing: **19.06.2008**

(51) Int Cl.:
***B62D 5/06*** (2006.01)

(86) International application number:
**PCT/IB2008/001607**

(87) International publication number:
**WO 2008/155641 (24.12.2008 Gazette 2008/52)**

(54) **DUCT PROVIDED WITH A DEVICE FOR ABSORPTION OF PRESSURE PULSES**

MIT EINER VORRICHTUNG ZUM ABSORBIEREN VON DRUCKIMPULSEN VERSEHENER KANAL

CONDUIT COMPORTANT UN DISPOSITIF POUR L'ABSORPTION D'IMPULSIONS DE PRESSION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.06.2007 IT TO20070445**

(43) Date of publication of application:
**03.03.2010 Bulletin 2010/09**

(73) Proprietors:
• **Fiat Group Automobiles S.p.A.**
**10135 Torino (TO) (IT)**
• **DYTECH - Dynamic Fluid Technologies S.p.A.**
**10123 Torino (IT)**

(72) Inventors:
• **BARALE, Emanuele**
**I-10135 Torino (IT)**
• **ZANARDI, Mariofelice**
**I-10123 Torino (IT)**

(74) Representative: **Mola, Edoardo et al**
**Studio Torta S.r.l.**
**Via Viotti, 9**
**10121 Torino (IT)**

(56) References cited:
**DE-A1- 10 352 689     DE-A1-102004 045 100**

**Description**

TECHNICAL FIELD

The present invention relates to a duct which is provided with a device for absorption of pressure pulses, preferably for use in a hydraulic steering system of a motor vehicle.

BACKGROUND ART

A hydraulic steering system generally comprises a supply pump, a steering actuator which is connected to the front wheels, and a hydraulic line in order to connect the pump to the steering actuator.
The hydraulic line comprises a high-pressure pipe in order to connect the pump to the actuator, and a low-pressure discharge duct for recuperation of the work fluid.
The pumps which supply hydraulic steering systems are generally vane pumps, and generate a flow with a rate characterised by harmonic irregularities which are equal to the number of the vanes of the pump, and with a basic frequency defined by the number of revolutions of the pump. These irregularities of flow generate pressure pulses in the hydraulic steering system, and consequently undesirable noise. The pressure pulses which are generated by the irregularities of flow are characterised by a high frequency in a band between 100Hz and 500Hz; in particular, the minimum value of this frequency band (fmin) which is typical of a hydraulic steering system can be calculated theoretically as the ratio of the minimum number of revolutions of the engine (RPMidle) multiplied by the ratio of transmission between the pump and engine (RT) and the number of vanes (Nvanes). In particular, the minimum frequency of the pulses of the hydraulic steering system is habitually defined by means of the formula:

$$f_{\min} = \frac{RPM_{idle}}{60}.RT.N_{vanes} \tag{1}$$

It is known to attenuate these pulses by means of the use of silencer pipes fitted inside the high-pressure duct, and which have geometric and mechanical characteristics such as to give rise to reflected pressure waves which interfere with the incident waves. In particular, these silencer pipes are known as "quarter wave", and their dimensioning law is as follows:

$$f_t = \frac{c}{4.L_T} \tag{2}$$

Where:

ft    is the basic cutting frequency of the silencer;
c    the is the speed of propagation of the pressure wave, i.e. speed of the sound in the fluid; and
Lt    is the length of the silencer pipe.

However, this solution is unsatisfactory when the cutting frequency required is low, i.e. lower than 60Hz, because the conventional piping of a hydraulic steering system, comprising a silencer pipe, has in the band 20-40 Hz its own resonance frequency, which is not adequately absorbed. It can also easily happen that the high-pressure piping of the hydraulic steering system amplifies the pressure pulses generated on the pump in the aforementioned low-frequency band.
Knowing the typical characteristics of piping which is generally used in a hydraulic steering system, and the characteristics and conditions of functioning of the work fluid, a quarter-wave silencer which makes it possible to obtain cutting frequencies lower than 40 Hz requires excessive dimensions which are not compatible with the hydraulic steering systems normally used on motor vehicles.
In addition, there would be problems of promptness of response of the hydraulic steering system and thus of the driveability of the motor vehicle.
In normal conditions of use, hydraulic steering systems are not subjected to an external forcing agent with a frequency lower than that calculated by means of the formula (1), and therefore lower than 100-120Hz.
However, there are two possible cases in which a low-frequency pressure pulse is generated in the hydraulic steering system, i.e. in the case of:

hydraulic-mechanical resonance of the steering and suspension system (phenomena known as "grunt" and "shudder");

an irregularity of motion of the engine which is transmitted to the accessories, and therefore to the steering pump.

In particular, these irregularities are present in all direct-injection engines, and with greater intensity in diesel engines. In addition, these irregularities are all the greater, the lower the minimum speed of the engine itself. At present, the need to reduce emissions of pollutant substances is forcing the manufacturing companies to obtain lower minimum speeds of rotation, lighter engines, and more compact flywheels. These conditions generate severe torsional vibrations of the engine shaft, and consequent irregularities of motion of the drive pulley which drives the vane pump of the hydraulic steering system.

At present, the phenomenon of low-frequency noise of hydraulic steering systems is the greatest design problem for the silencers of the steering system piping.

Patent application DE 10 2004 045 100 describes two embodiments of a spring damper for a breaking circuit that is not provided with a pump. In the first embodiment a piston is housed in a chamber and is kept in an equilibrium position by means of two opposing springs. The chamber is connected in parallel to a main adduction line by means of a first and a second conduit set at opposite sides with respect to the piston. In use, a portion of the energy carried by a pressure peak due e.g. to an abrupt actuation of the pedal, is converted in elastic potential energy and this causes a reduction of the oscillations. Furthermore, a throttling is set along the adduction line to dampen the pulsations.

In the second embodiment, the chamber housing the piston and the two springs is connected to the adduction line by means of a single connection. Furthermore, the piston defines a through hole to allow the fluid flow when the piston is moving.

In both embodiments, the springs function as elastic potential energy accumulators and this requires that a substantial quantity of fluid flows through the connections. The accumulated energy is returned in the system with a delay with respect to the initial peak and this attenuates the pulsations.

In an hydraulic steering circuit, as in other circuits comprising a pump, the latter generates continuous pulsations when working at low frequency and a spring accumulator like the one that was previously described does not function satisfactorily.

## DISCLOSURE OF INVENTION

The object of the present invention is to produce a duct which is provided with a device to absorb the pressure pulses, and is free from the above-described disadvantages.

The object of the present invention is obtained by means of a duct provided with a device for absorption of the pressure pulses, as defined in claim 1.

## BRIEF DESCRIPTION OF THE DRAWINGS

For better understanding of the present invention, a preferred embodiment is now described, purely by way of non-limiting example, with reference to the attached drawings, in which:

figure 1 is a representative example of a hydraulic steering system comprising a duct according to the present invention;
figure 2 is a fluid diagram of a duct according to figure 1;
figure 3 is an axial cross-section of an embodiment of a duct according to figure 1;
figure 4 is a fluid diagram of a duct according to a further embodiment of the present invention; and
figure 5 is a series of two graphs in which there is comparison of the frequency response curves for a duct without a device for absorption of the low-pressure pulses, and for a duct which is provided with a device according to the present invention, for absorption of the pressure pulses.

## BEST MODE FOR CARRYING OUT THE INVENTION

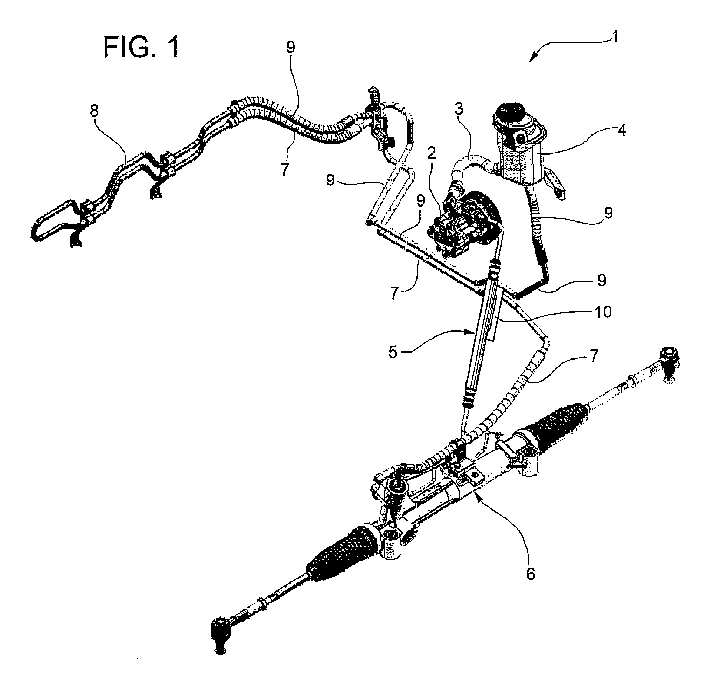

In figure 1, 1 indicates as a whole a hydraulic steering system comprising a hydraulic pump 2, which, by means of suction piping 3, is connected to a work fluid (oil) tank 4. 5 indicates as a whole high-pressure supply piping, which connects the delivery of the pump 2 to a steering box or unit 6, of a type which in itself is known.

A first low-pressure return duct 7 for the work fluid, which in the example illustrated is produced with alternately flexible and rigid sections, connects the steering box or unit 6 to a cooling coil-type heat exchanger 8, for cooling of this fluid. The outlet of the exchanger 8 is connected to the tank 4 by means of a second return duct, indicated as 9, and also formed by pieces or sections of flexible and rigid piping.

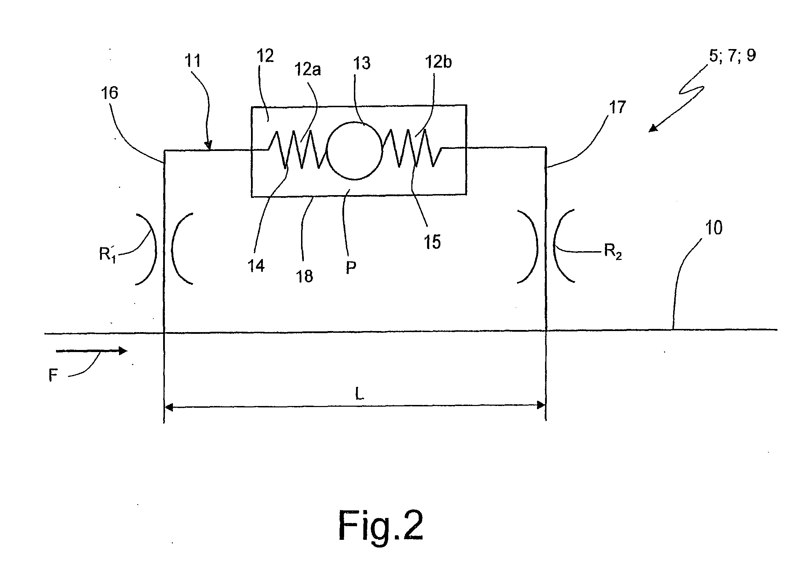

The high-pressure piping 5 and/or at least one of the low-pressure ducts 7, 9 comprise a pipe 10 and an absorption device 11, which is connected in parallel to the pipe 10 (figure 2).

In particular, the absorption device 11 defines an elongate cylindrical chamber 12 and an inertial element 13, for example a sphere, which is mobile in the chamber 12, and a pair of springs 14, 15 which are fitted on opposite sides in relation to the inertial element 13 inside the chamber 12.

The springs 14, 15 co-operate with the inertial element 13 in order to define the position of the latter in both static and dynamic conditions, as will be described in greater detail hereinafter.

The chamber 12 is connected to the pipe 10 by means of a pair of connections 16, 17 which define respective narrowed parts R1, R2 disposed on opposite sides in relation to the inertial element 13 at a distance L along the pipe 10.

In particular, the narrowed parts R1, R2 have respective diameters which are smaller than that of the pipe 10, such that the connections 16, 17 substantially do not have a flow of fluid passing through them.

The inertial element 13 divides the chamber 12 into two compartments 12a, 12b which have a volume which varies depending on the position of the inertial element 13, and are connected to the pipe 10 by means of the connection 16 and the connection 17 respectively. In addition, the compartments 12a, 12b communicate with one another in a fluid manner inside the chamber 12, by means of a passage P.

The passage P disconnects the pressure of the compartment 12a from that of the compartment 12b, and is provided, for example, by means of an annular channel defined between the inertial element 13 and a lateral wall 18 of the chamber 12.

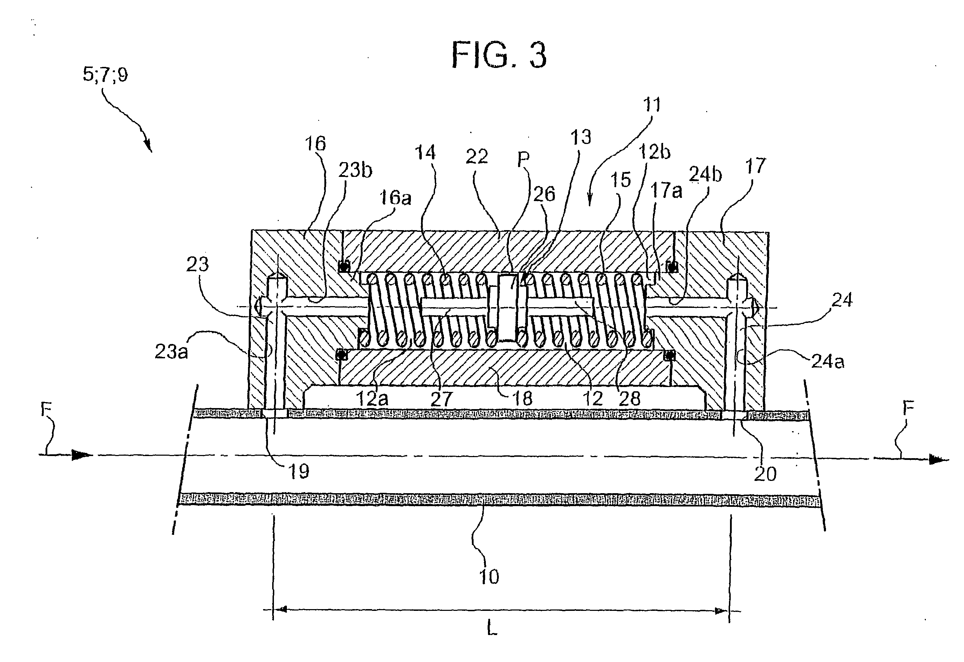

According to a preferred embodiment illustrated in figure 3, the absorption device 11 comprises the two connections 16, 17 which are connected to respective apertures 19, 20 in the pipe 10 and a rigid, substantially tubular intermediate element 22 which is interposed between the connections 16, 17.

Through the connections 16, 17 there pass respective ducts 23 and 24 which have a development in the shape of an "L", and define the narrowed parts R1, R2 respectively. In particular, the duct 23 of the connection 16 has two sections 23a and 23b which are at right-angles to one another, and communicate: the section 23a is connected to the pipe 10 and the section 23b extends parallel to this pipe, and opens inside the intermediate tubular element 22.

Similarly, the duct 24 of the terminal element 21 has two sections 24a and 24b, of which the former communicates with the pipe 10 at a distance L from the aperture 12 in the piping 5, and the latter opens inside the intermediate tubular element 22.

In the embodiment illustrated, the connections 16, 17 have respective facing protuberances 16a and 17a, which are engaged in the corresponding ends of the intermediate tubular element 22, with interposition of respective "O"-ring seals.

Inside the intermediate tubular element 22, between said protuberances of the connections 16, 17, there is defined the chamber 12 which by means of the ducts 23 and 24 communicates with the pipe 10.

In the chamber 12 there is fitted the inertial element 13 comprising a piston 26, which in the example illustrated is substantially cylindrical. From the opposite sides of the piston 26 there extend two axially aligned rods 27 and 28. The piston 26 is fitted such as to be mobile in the chamber 12, and defines the passage P in order to permit the leakage of the fluid between the compartments 12a, 12b.

This leakage can be made possible by the effect of radial play between the piston 26 and the lateral wall 18 of the chamber 12, and/or by other arrangements such as holes or notches in its periphery.

The springs 14, 15 are disposed on opposite sides in relation to the piston 26, respectively around the rod 27 and the rod 28.

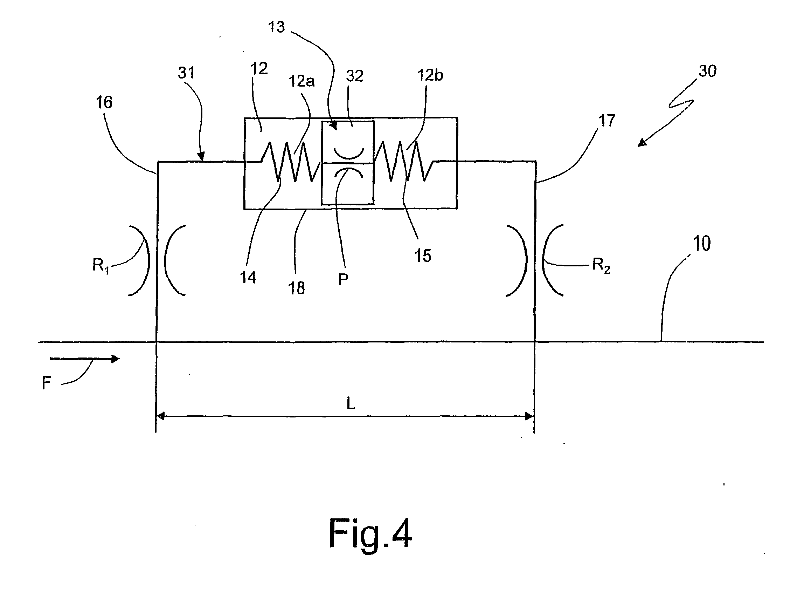

Figure 4 illustrates the diagram of a high- or low-pressure duct 30 according to a further embodiment of the present invention, in which the components which are functionally identical to the components of the duct 1 are indicated by the same reference numbers as those used in the description of the high-pressure piping 5.

In particular, the duct 30 comprises the pipe 10 and an absorption device 31 which defines the chamber 12, and comprises the connections 16, 17, a cylindrical drawer 32 which slides in the chamber 12, and the springs 14, 15.

The drawer 32 defines an axial through hole which constitutes the passage P and permits the absorption action by means of the transfer of work fluid between the compartment 12a and the compartment 12b inside the chamber 12.

In use, the pipe 10 and the absorption device 11, 31 are fitted along the high-pressure piping 5 in order to absorb efficiently the pressure pulses generated by the irregularity of rotation of the shaft with bends, and/or along at least one of the low-pressure ducts 7, 9, in order to absorb the low-frequency pulses caused for example by the hydraulic-mechanical resonance of the suspension system.

In a condition of rest, the pressure of the work fluid in the chamber 12 is hydrostatic, and the position of the inertial element 13 is determined exclusively by the balance of the forces applied respectively by the springs 14, 15.

When the work fluid flows in the pipe 10 as illustrated by the arrow F, the pressure pulse of the pipe 10 is transmitted inside the compartments 12a, 12b by the respective connections 16, 17, and causes forced oscillation of the inertial element 13. In particular, the inertial element 13 is subjected to the action of the relative pressure derived from the difference in the absolute pressures which are present respectively in the compartments 12a, 12b.

The absorption device 11, 31 thus defines a dynamic absorber wherein the mass is constituted by the inertial element 13, and the stiffness is defined by the pair of springs 14, 15. Thus, the ratio between the stiffness of the springs 14, 15 and the mass of the inertial element 13 can be such as to obtain a resonant system which is extremely efficient in dissipating the energy of the pulses which are derived from the pipe 10, and have frequencies contained in a low-frequency interval which depends on the aforementioned ratio.

Narrowed parts R1, R2 avoid that a considerable quantity of fluid flows in device 11 and allow, at least theoretically, that only a pressure signal propagates in chamber 12. It is therefore avoided that an excessive amount of fluid is accumulated in chamber 12.

In addition, the passage P defines localised hydraulic resistance by means of which the work fluid is blown by, in order to absorb the oscillation of the inertial element 13.

The effect of the absorption device 11, 31 in parallel with the pipe 10 can be determined experimentally, or it can be investigated analytically on the basis of a suitable mathematical model.

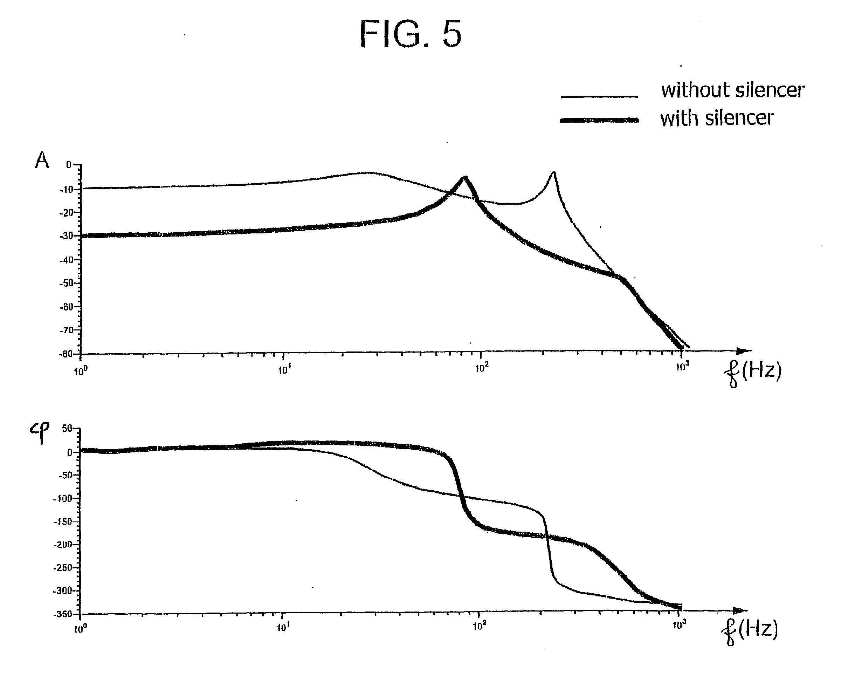

The two graphs in figure 5 compare (when there is variation of the frequency f recorded on the x-axis) developments of the amplitude A and of the phase f of the vibration for a duct without the device 11, 31 (curves in a thin line) and for a duct provided with the device 11, 31 according to the invention (curves in a thicker line).

Analysis of the diagrams in figure 5 makes it possible to see easily that in the field of frequencies between 20 Hz and 70 Hz, the presence of the device 11, 31 gives rise to a clear operative improvement, with a marked reduction in the amplitude A of the frequency response, and consequently of the amplitude of the vibrations and of the flywheel.

The solution according to the invention substantially makes it possible to eliminate the low-frequency resonance peaks, whilst maintaining unaltered the layout of the high-pressure supply piping. This therefore provides an optimum compromise between compactness and strength.

The advantages which the ducts previously described make it possible to obtain are as follows.

Seeing that absorption device 11, 31 is reactive, it is extremely efficient in reducing the noise caused by pulses, and can easily be designed to attenuate the low-frequency pressure pulses. In addition, the absorption device 11, 31 is compact and fitted in parallel with the pipe 10, inside which the conventional quarter-wave silencer pipes can be fitted. In addition, the absorption device 11, 31 does not have undesirable dissipative effects, and it does not affect the response time of the power steering system.

Finally, it is apparent that modifications and variations can be made to the ducts described and illustrated, without departing from the protective scope of the present invention, as defined in the attached claims.

For example, in a non-limiting embodiment, the chamber 12 is defined by a flexible pipe comprising a layer of polymer material, for example by a piece of pipe for the high-pressure branch of a hydraulic steering system.

**Claims**

1. Duct (5; 7; 9; 30) for a hydraulic steering system of a motor vehicle, comprising a pipe (10) for feeding a fluid and a device (11; 31) for absorption of the fluid pressure pulses, wherein said device (11; 31) comprises a chamber (12) which is connected in parallel to said pipe (10) by means of a first and a second connection (16, 17), an inertial element (13) which is mobile inside said chamber (12), resilient means (14; 15) acting on said inertial element (13) in order to maintain said inertial element (13) in an intermediate position, such as to define a first and a second compartment (12a, 12b) inside the chamber (12), **characterised by** a passage (P) set inside said chamber (12) to connect said compartments (12a, 12b) to one another in order to permit leakage of fluid while said inertial element (13) is moving, wherein at least one of said first and second connections (16, 17) defines a narrowed part (R1, R2) with a diameter smaller than that of pipe (10).

2. Duct (5; 7; 9; 30) according to claim 1, **characterised in that** also the other of said first and second connections (16, 17) defines a second narrowed part (R1, R2).

3. Duct (5; 7; 9; 30) according to any of the preceding claims, **characterised in that** said resilient means comprise a first and a second spring (14, 15) which are fitted opposite one another relative to said inertial element (13).

4. Duct (5; 7; 9) according to any one of the preceding claims, **characterised in that** said passage (P) is a channel defined between said inertial element (13) and a lateral wall (18) which defines said chamber (12).

5. Duct (5; 7; 9) according to claim 4, **characterised in that** said inertial element (13) comprises a piston (26).

6. Duct (5; 7; 9) according to claims 3 and 5, **characterised in that** said piston (26) comprises a first and second rod (27, 28) which are opposite one another, and **in that** said first and second springs (14, 15) are helical springs, and surround respectively said first and second rods (27, 28).

7. Duct (30) according to any one of claims 1 to 3, **characterised in that** said passage (P) is a through hole defined by said inertial element (13).

8. Duct (30) according to any one of the preceding claims, **characterised in that** said first and second connections (16, 17) have respective facing protuberances (16a, 17a), which engage in a manner sealed against fluid in the opposite ends of a rigid intermediate tubular element (22) which defines said chamber (12).

**Patentansprüche**

1. Leitung (5; 7; 9; 30) für ein hydraulisches Lenksystem eines Motorfahrzeugs, umfassend ein Rohr (10) zur Zuführung eines Fluids und eine Vorrichtung (11; 31) zur Absorption von Fluiddruckpulsen, wobei die Vorrichtung (11; 31) eine Kammer (12) umfasst, welche parallel mit dem Rohr (10) mittels einer ersten und zweiten Verbindung (16; 17) verbunden ist, einen Inertialelement (13), das beweglich innerhalb der Kammer (12) ist, elastische Mittel (14; 15), die auf das Inertialelement (13) wirken um das Inertialelement (13) in einer Zwischenposition zu halten, sodass ein erstes und zweites Abteil (12a; 12b) in der Kammer (12) definiert wird, **dadurch gekennzeichnet, dass** eine Passage (P) in der Kammer (12) ist, um die Abteile (12a; 12b) miteinander zu verbinden, um das Austreten von Fluid während sich das Inertialelement bewegt, zu erlauben, wobei zumindest eine der ersten und zweiten Verbindungen (16; 17) einen verengten Part (R1; R2) definiert, aufweisend einen Durchmesser kleiner als der des Rohrs (10).

2. Leitung (5; 7; 9; 30) gemäß Anspruch 1 **dadurch gekennzeichnet, dass** auch die andere der ersten und zweiten Verbindung (16; 17) einen zweiten verengten Part (R1; R2) definiert.

3. Leitung (5; 7; 9; 30) gemäß einem der vorangegangen Ansprüchen, **dadurch gekennzeichnet, dass** die elastischen Elemente eine erste und zweite Feder (14; 15) umfassen, welche entgegengesetzt zueinander, relativ zum Inertialelement (13) angeordnet sind.

4. Leitung (5; 7; 9) gemäß einem der vorangegangen Ansprüchen, **dadurch gekennzeichnet, dass** die Passage (P) ein Kanal ist, der zwischen dem Inertialelement (13) und einer lateralen Wand (18), welche die Kammer (12) definiert, ausgeformt ist.

5. Leitung (5; 7; 9) gemäß Anspruch 4, **dadurch gekennzeichnet, dass** das Inertialelement (13) einen Kolben (26) umfasst.

6. Leitung (5; 7; 9) gemäß den Ansprüchen 3 und 5, **dadurch gekennzeichnet, dass** der Kolben (26) einen ersten und zweiten Stab (27; 28) umfasst, welche sich gegenüber liegen, und **dadurch**, dass die erste und zweite Feder (14; 15) Schraubenfedern sind, und jeweils den ersten und zweiten Stab (27; 28) umgehen.

7. Leitung (30) gemäß einem der Ansprüche 1 bis 3, **dadurch gekennzeichnet, dass** die Passage (P) eine Durchgangsbohrung ist, die durch das Inertialelement (13) definiert wird.

8. Leitung (30) gemäß einem der vorangegangenen Ansprüchen, **dadurch gekennzeichnet, dass** die erste und zweite Verbindung (16; 17) jeweils zueinander zeigende Vorsprünge (16a; 17a) haben, welche in fluidabdichtender Art und Weise mit den gegenüberliegenden Enden eines starren, zwischenliegendem Röhrenelements (22), welches die Kammer (12) definiert, in Eingriff sind.

**Revendications**

1. Conduit (5 ; 7 ; 9 ; 30) pour un système de direction hydraulique d'un véhicule à moteur, comprenant un tuyau (10) pour alimenter un fluide et un dispositif (11 ; 31) pour l'absorption des impulsions de pression de fluide, dans lequel ledit dispositif (11 ; 31) comprend une chambre (12) qui est raccordée en parallèle audit tuyau (10) au moyen d'un premier et d'un deuxième raccordement (16, 17), un élément inertiel (13) qui est mobile à l'intérieur de ladite chambre (12), des moyens élastiques (14 ; 15) agissant sur ledit élément inertiel (13) afin de maintenir ledit élément inertiel (13) dans une position intermédiaire, afin de définir un premier et un deuxième compartiment (12a, 12b), **caractérisé par**, à l'intérieur de la chambre (12), un passage (P) placé à l'intérieur de ladite chambre (12) pour raccorder lesdits compartiments (12a, 12b) entre eux afin de permettre la fuite du fluide alors que ledit élément inertiel (13) se déplace, dans lequel au moins l'un desdits premier et deuxième raccordements (16, 17) définit une partie rétrécie (R1, R2) avec un diamètre inférieur à celui du tuyau (10).

2. Conduit (5 ; 7 ; 9 ; 30) selon la revendication 1, **caractérisé en ce qu'**également l'autre desdits premier et deuxième raccordements (16, 17) définit une deuxième partie rétrécie (R1, R2).

3. Conduit (5 ; 7 ; 9 ; 30) selon l'une quelconque des revendications précédentes, **caractérisé en ce que** lesdits moyens élastiques comprennent un premier et un deuxième ressort (14, 15) qui sont montés à l'opposé l'un de l'autre par rapport audit élément inertiel (13).

4. Conduit (5 ; 7 ; 9) selon l'une quelconque des revendications précédentes, **caractérisé en ce que** ledit passage (P) est un canal défini entre ledit élément inertiel (13) et une paroi latérale (18) qui définit ladite chambre (12).

5. Conduit (5 ; 7 ; 9) selon la revendication 4, **caractérisé en ce que** ledit élément inertiel (13) comprend un piston (26).

6. Conduit (5 ; 7 ; 9) selon les revendications 3 et 5, **caractérisé en ce que** ledit piston (26) comprend une première et une deuxième tige (27, 28) qui sont opposées entre elles, et **en ce que** lesdits premier et deuxième ressorts (14, 15) sont des ressorts hélicoïdaux, et entourent respectivement lesdites première et deuxième tiges (27, 28).

7. Conduit (30) selon l'une quelconque des revendications 1 à 3, **caractérisé en ce que** ledit passage (P) est un trou de passage défini par ledit élément inertiel (13).

8. Conduit (30) selon l'une quelconque des revendications précédentes, **caractérisé en ce que** lesdits premier et deuxième raccordements (16, 17) ont des protubérances en vis-à-vis (16a, 17a) respectives qui se mettent en prise de manière étanche contre le fluide dans les extrémités opposées d'un élément tubulaire intermédiaire rigide (22) qui définit ladite chambre (12).

FIG. 1

Fig.2

# FIG. 3

Fig.4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102004045100